# DEMANDE DE BREVET EUROPEEN

(11) **EP 1 205 096 A2**
(43) Date de publication de la demande: **15.05.2002**
(21) Numéro de dépôt: 02002944.3
(22) Date de dépôt: 14.10.1997
(51) Int. Cl.: A01B 15/14

(54) **Charrue**

(30) Priorité: 18.10.1996 FR 9612864
(62) Demande divisionnaire de: 97440096.2
(71) Demandeur: Kuhn-Huard S.A., 44142 Chateaubriant Cedex (FR)
(72) Inventeur: Perret, Louis, 44110 Chateaubriant (FR); Gentilhomme, Guy, 44110 Louisfert (FR)
(74) Mandataire: Andres, Jean-Claude

(57) **Abrégé**

La présente invention se rapporte à une charrue (1E) comportant un avant-train (2) lié à un arrière-train (3C) muni de corps de labour (14C) au moyen d'un dispositif de liaison (4E) comprenant une bielle principale (25) articulée à l'arrière-train (3C) autour d'un axe de pivotement (29), une deuxième bielle auxiliaire (27C) articulée sur l'arrière-train (3C) autour d'un axe de pivotement arrière (33) et une première bielle auxiliaire (26).

L'invention est remarquable par le fait que :
- la première bielle auxiliaire (26) est réglable en longueur et est articulée sur l'arrière-train (3C) autour d'un premier axe de pivotement arrière (29),
- la deuxième bielle auxiliaire (27C) est de longueur réglable, chaque longueur spécifique de la deuxième bielle auxiliaire (27C) correspondant à une position de largeur de coupe respective des corps de labour (14C).

## Description

La présente invention se rapporte à une charrue comportant:
- un avant-train destiné à être lié à un véhicule moteur,
- un arrière-train comportant une structure porteuse sur laquelle sont articulés des corps de labour autour d'un axe d'articulation respectif de sorte à pouvoir occuper au moins deux positions de largeur de coupe différentes,
- un dispositif de liaison liant l'arrière-train à l'avant-train et comprenant :
   * une bielle principale articulée sur l'avant-train autour d'un premier axe de pivotement et sur l'arrière-train autour d'un deuxième axe de pivotement, et
   * une première bielle auxiliaire articulée sur l'avant-train autour d'un premier axe de pivotement avant, et une deuxième bielle auxiliaire articulée sur l'avant-train autour d'un deuxième axe de pivotement avant et sur l'arrière-train autour d'un deuxième axe de pivotement arrière,
les trois bielles étant disposées de telle façon que la bielle principale converge vers l'arrière avec la deuxième bielle auxiliaire en un point de convergence virtuel arrière.

On connaît une telle charrue, par exemple par le document EP 0 540 408. Cette charrue connue comporte un arrière-train lié à un avant-train au moyen d'un dispositif de liaison comportant :
- une bielle principale articulée sur l'avant-train autour d'un premier axe de pivotement et sur l'arrière-train autour d'un deuxième axe de pivotement,
- une première bielle auxiliaire réglable en longueur articulée sur l'avant-train autour d'un premier axe de pivotement avant et sur l'arrière-train autour d'un premier axe de pivotement arrière,
- une deuxième bielle auxiliaire réglable en longueur articulée sur l'avant-train autour d'un deuxième axe de pivotement avant et sur l'arrière-train autour d'un deuxième axe de pivotement arrière.

La bielle principale converge d'une part vers l'arrière avec la deuxième bielle auxiliaire en un point de convergence virtuel situé en arrière et d'autre part vers l'avant avec la première bielle auxiliaire en un point de convergence virtuel situé en avant de la charrue.

L'arrière-train est doté de corps de labour articulés sur une structure porteuse autour d'un axe d'articulation respectif. A cet effet, on peut faire varier la largeur entre les corps de labour en pivotant, d'une part chaque corps de labour autour de son axe d'articulation et en agissant d'autre part sur la deuxième bielle auxiliaire de sorte à compenser angulairement la variation angulaire des corps de labour.

Pour effectuer le réglage du déport latéral et du devers de pointe, on agit simplement sur la première bielle auxiliaire.

Pour modifier le réglage du déport latéral, afin d'adapter la charrue à une nouvelle voie du tracteur, on agit simultanément sur les deux bielles auxiliaires en raccourcissant l'une des bielles auxiliaires de la même longueur que l'on rallonge l'autre.

On notera que, après un réglage de la largeur de travail, il faut réajuster le réglage du déport latéral et du devers de pointe en agissant sur la première bielle auxiliaire.

Cette charrue connue fait appel à des réglages qui dépendent les uns des autres ce qui complique sa mise en oeuvre.

En outre, cette charrue connue présente, du fait de l'implantation des différentes bielles, un arrière-train relativement imposant ce qui se traduit par une charrue relativement lourde et onéreuse.

Le but de la présente invention est d'améliorer cette charrue connue en simplifiant notamment sa mise en oeuvre tout en cherchant à obtenir un coût de revient modeste.

A cet effet, une charrue selon la présente idée inventive est caractérisée en ce que :
- la première bielle auxiliaire est réglable en longueur et est articulée sur l'arrière-train autour d'un premier axe de pivotement arrière,
- la deuxième bielle auxiliaire est de longueur réglable, chaque longueur spécifique de la deuxième bielle auxiliaire correspondant à une position de largeur de coupe respective du corps de labour.

Grâce à ces caractéristiques, le réglage de la largeur de travail est indépendant du réglage du déport latéral et du devers de pointe, ce qui permet d'agir sur l'un des réglages sans avoir à réajuster l'autre réglage. En sus, l'agencement des différentes bielles de la charrue selon l'invention permet d'avoir un arrière-train relativement léger.

L'invention concerne également les caractéristiques suivantes considérées isolément ou dans toutes leurs combinaisons techniquement possibles :
- l'axe longitudinal de la première bielle auxiliaire coupe l'axe longitudinal de la bielle principale aux alentours du deuxième axe de pivotement,
- le deuxième axe de pivotement et le premier axe de pivotement arrière sont confondus,
- la première bielle auxiliaire est de longueur réglable pour le réglage du déport latéral et du devers de pointe,
- le premier axe de pivotement avant et le deuxième axe de pivotement avant peuvent occuper plusieurs positions distinctes sur ledit avant-train, chaque position correspondant à une plage respective d'entrepneus de véhicules moteurs auxquels est destinée à être liée la charrue,
- l'avant-train comporte trois trous destinés à recevoir le premier axe de pivotement avant et le deuxième axe de pivotement avant, le trou intérieur et le trou médian servant pour un véhicule moteur avec un entrepneu plus large, tandis que le trou médian et le trou extérieur servant pour un véhicule moteur avec un entrepneu moins large,
- les différents axes de pivotement sont, en position de travail, sensiblement verticaux.

D'autres objets et caractéristiques ressortiront de la description ci-après avec références aux dessins annexés qui représentent à titre d'exemples non limitatifs, quelques formes de réalisation de la charrue selon l'invention.

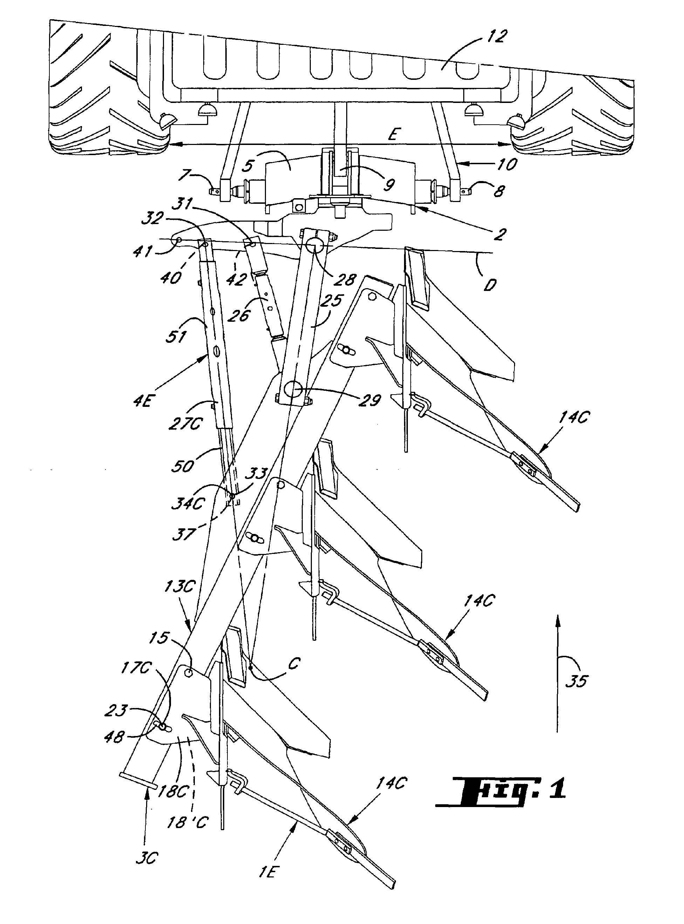

La figure 1 représente, selon une forme de réalisation, une charrue selon l'invention vue de dessus,

La charrue (1E) représentée sur la figure 1 est une charrue à largeurs multiples qui comporte dans les grandes lignes un avant-train (2), un arrière-train (3C) et un dispositif de liaison (4E) liant ledit arrière-train (3C) audit avant-train (2).

L'avant-train (2) comporte selon l'exemple représentée une tête d'attelage (5) munie de deux points d'attelage inférieurs (7, 8) et un point d'attelage supérieur (9) au moyen desquels la charrue (1E) est liée au dispositif de relevage (10) d'un véhicule moteur (12).

L'arrière-train (3C) quant à lui comporte une structure porteuse (13C) sur laquelle sont liés des corps de labour (14C).

Chaque corps de labour (14C) est lié à la structure porteuse (13C) au moyen d'un axe d'articulation (15) et d'une broche (17C) s'étendant chacun au moins sensiblement verticalement. Selon l'exemple représenté, chaque corps de labour (14C) comporte deux ailes (18C, 18'C) à l'intérieur desquelles s'étend partiellement la structure porteuse (13C), l'axe d'articulation (15) et la broche (17C) s'étendant de part en part au travers desdites ailes (18C, 18'C) et de ladite structure porteuse (13C).

Selon l'exemple de réalisation représenté, les ailes (18C, 18'C) de chaque corps de labour (14C) comportent chacune un trou oblong (48) centré autour de l'axe d'articulation (15) correspondant, ce qui permet de pivoter chaque corps de labour (14C) autour dudit axe d'articulation (15) dans une infinité de positions correspondant chacune à une largeur de coupe.

A cet effet, les ailes (18C, 18'C) de chaque corps de labour (14C) comporte un trou oblong (48) destinés à collaborer avec un trou (23) prévu dans la structure porteuse (13C). Le trou oblong (48) et le trou (23) étant destinés à recevoir la broche (17C), ce qui permet de fixer chaque corps de labour (14C) à ladite structure porteuse (13C) dans une infinité de positions différentes correspondant chacune à une largeur de coupe.

Le dispositif de liaison (4E) quant à lui comporte une bielle principale (25) et deux bielles auxiliaires (26, 27C).

La bielle principale (25) est articulée d'une part sur l'avant-train (2) autour d'un premier axe de pivotement (28) au moins sensiblement vertical et d'autre part sur l'arrière-train (3C) autour d'un deuxième axe de pivotement (29) au moins sensiblement vertical.

La première bielle auxiliaire (26) est de longueur réglable permettant, selon l'exemple représenté, de varier la longueur de ladite première bielle auxiliaire (26) de manière continue. Ladite première bielle auxiliaire (26) est articulée d'une part sur l'avant-train (2) autour d'un premier axe de pivotement avant (31) au moins sensiblement vertical, et d'autre part sur l'arrière-train (3C) autour d'un premier axe de pivotement arrière qui est, selon l'exemple représenté, confondu avec le deuxième axe de pivotement (29).

La deuxième bielle auxiliaire (27C) quant à elle, est de longueur variable et est d'une part articulée sur l'avant-train (2) autour d'un deuxième axe de pivotement avant (32) au moins sensiblement vertical et d'autre part sur l'arrière-train (3C) autour d'un deuxième axe de pivotement arrière (33) au moins sensiblement vertical.

On remarquera que le premier axe de pivotement (28) liant la bielle principale (25) à l'avant-train (2), le premier axe de pivotement avant (31) liant la première bielle auxiliaire (26) audit avant-train (2), et le deuxième axe de pivotement avant (32) liant la deuxième bielle auxiliaire (27C) audit avant-train (2) sont, selon une vue de dessus, au moins sensiblement situés sur une droite (D) qui s'étend au moins sensiblement orthogonalement à la direction d'avance (35).

A la lumière de la figure 1, on voit encore que la bielle principale (25) converge vers l'arrière avec la deuxième bielle auxiliaire (27C) en un point de convergence virtuel arrière (C).

On remarquera encore que la structure porteuse (13C) de l'arrière-train (3C) comporte un trou (37) centré autour du deuxième axe de pivotement (29) liant la bielle principale (25) à l'arrière-train (3C). Ce trou (37) est destiné à recevoir le deuxième axe de pivotement arrière (33) liant la deuxième bielle auxiliaire (27C) à l'arrière-train (3C), ce qui permet de pivoter l'arrière-train (3C) autour du deuxième axe de pivotement (29) dans une infinité de positions pour compenser angulairement la variation angulaire des corps de labour (14C) provoquée par le changement de la largeur de travail. Selon l'exemple représenté, le deuxième axe de pivotement arrière (33) est une broche (34C).

La charrue (1E) peut s'adapter à l'entrepneu du véhicule moteur (12) auquel elle est destinée à être liée (l'entrepneu étant la distance qui sépare les flancs intérieurs des roues du véhicule moteur (12)). A cet effet, le premier axe de pivotement avant (31) et le deuxième axe de pivotement avant (32) peuvent occuper plusieurs positions distinctes sur l'avant-train (2), chaque position correspondant à une plage respective d'entrepneus du véhicule moteur (12).

Pour ce faire, l'avant-train (2) comporte trois trous (40, 41, 42) destinés à recevoir le premier axe de pivotement avant (31) et le deuxième axe de pivotement avant (32). Les trois trous (40, 41, 42) étant situés, selon l'exemple représenté, au moins sensiblement sur la droite (D). Le trou intérieur (42) et le trou médian (40) servent pour un véhicule moteur (12) avec un entrepneu (E) plus large, tandis que le trou médian (40) et trou extérieur (41) servent pour un véhicule moteur (12) avec un entrepneu (e) moins large (non représenté).

Les principaux réglages de cette charrue (1E) s'effectuent de la manière suivante.

Tout d'abord l'opérateur choisi la largeur de coupe. Selon l'exemple de réalisation représenté, chaque corps de labour (14C) peut être pivoté autour de son axe d'articulation (15) dans une infinité de positions et la deuxième bielle auxiliaire (27C) est de longueur réglable.
autour de son axe d'articulation (15) dans une infinité de positions et la deuxième bielle auxiliaire (27C) est de longueur réglable.

On notera que chaque longueur spécifique de la deuxième bielle auxiliaire (27C) correspond à une position de largeur de coupe respective du corps de labour (14C).

Selon l'exemple de réalisation représenté, les ailes (18C, 18'C) de chaque corps de labour (14C) comportent chacune un trou oblong (48) centré autour de l'axe d'articulation (15) correspondant, ce qui permet de pivoter chaque corps de labour (14C) autour dudit axe d'articulation (15) dans une infinité de positions correspondant chacune à une largeur de coupe.

Selon l'exemple représenté, la deuxième bielle auxiliaire (27C) comporte une tige filetée (50) vissée dans un tube (51), ce qui permet de pivoter l'arrière-train (3C) autour du deuxième axe de pivotement (29) dans une infinité de positions jusqu'à ce que l'alignement des corps de labour (14C) soit parfaitement aligné par rapport à la direction d'avance (35).

Un tel agencement, tel que représenté sur la figure 1, permet de régler la largeur de coupe de la charrue (1C) d'une largeur maximum à une largeur minimum, de manière continue sans avoir à respecter des largeurs de travail prédéterminées.

Après le réglage de la largeur de travail de la charrue (1E), l'opérateur adapte ladite charrue (1E) à l'entrepneu (E, e) du véhicule moteur (12).

Pour ce faire, si par exemple le véhicule moteur (12) possède un entrepneu large (E), l'opérateur déplace l'arrière-train (3C) orthogonalement à la direction d'avance (35) en le faisant pivoter autour du premier et du deuxième axe de pivotement (28, 29), jusqu'à ce que le trou médian (40) puisse recevoir le deuxième axe de pivotement (32) liant la deuxième bielle auxiliaire (27C) à l'avant-train (2), et que le trou intérieur (42) puisse recevoir le premier axe de pivotement avant (31) liant la première bielle auxiliaire (26) audit avant-train (2).

Lorsque le véhicule moteur (12) possède un entrepneu moins large (e), l'opérateur procède d'une manière similaire à celle décrite ci-dessus en liant la première et la deuxième bielle auxiliaire (26, 27C) à l'avant-train (2) via respectivement le trou médian (40) et le trou extérieur (41).

Ce réglage d'adaptation de la charrue (1E) à l'entrepneu (E, e) du véhicule moteur (12) s'effectue en général une fois pour un véhicule moteur (12) déterminé.

Ensuite, pour un bon équilibrage véhicule moteur (12) / charrue (1E), l'opérateur règle le déport latéral et le devers de pointe en agissant uniquement sur la première bielle auxiliaire (26) qui est de longueur variable.

Les réglages du déport latéral et du devers de pointe ainsi que le réglage de la largeur de coupe peuvent donc également être réglés de manière continue sans avoir à respecter des paliers prédéterminés.

Cette forme de réalisation permet en sus d'adapter plus précisément la charrue (1E) à une certaine plage d'entrepneus.

Finalement, différentes modifications restent possibles notamment en ce qui concerne la constitution des divers éléments ou par substitution d'équivalents techniques, ou encore par combinaison des différents exemples de réalisation représentés, sans pour autant sortir du domaine de protection défini dans les revendications.

C'est ainsi qu'il est parfaitement possible de réaliser une charrue réversible et/ou semi-portée ou traînée équipée d'un dispositif de liaison (4E) tel que décrit précédemment.

Il est parfaitement imaginable de remplacer la deuxième bielle auxiliaire (27C) par un vérin hydraulique qui est commandé à partir du véhicule moteur (12) de manière à pouvoir replier hydrauliquement la charrue lors du transport.

De la même manière, il est également envisageable de remplacer la première bielle auxiliaire (26) par un autre vérin hydraulique qui est commandé à partir du véhicule moteur (12) de sorte à pouvoir régler à partir du véhicule moteur le déport latéral et le devers de pointe. En combinant un dispositif de liaison (4E) décrit précédemment avec un mécanisme de commande connu qui fait pivoter chaque corps de labour (14C) autour de l'axe d'articulation (15) correspondant et en remplaçant la deuxième bielle auxiliaire (27C) par un vérin hydraulique, il est parfaitement possible de réaliser une charrue à largeur variable commandée à partir du véhicule moteur (12).

Il est encore possible de prévoir plus de trous (40, 41, 42) prévu sur l'avant-train (2) de manière à pouvoir adapter la charrue (1E) à un nombre plus important d'entrepneus du véhicule moteur (12). Les trous (40, 41, 42) de l'avant-train (2) peuvent également être remplacés par un ou plusieurs trous oblongs de manière à pouvoir adapter la charrue à n'importe quel entrepneu du véhicule moteur (12) correspondant.

## Revendications

1. Charrue comportant :
- un avant-train (2) destiné à être lié à un véhicule moteur (12),
- un arrière-train (3C) comportant une structure porteuse (13C) sur laquelle sont articulés des corps de labour (14C) autour d'un axe d'articulation (15) respectif de sorte à pouvoir occuper au moins deux positions de largeur de coupe différentes,
- un dispositif de liaison (4E) liant l'arrière-train (3C) à l'avant-train (2) et comprenant :
* une bielle principale (25) articulée sur l'avant-train (2) autour d'un premier axe de pivotement (28) et sur l'arrière-train (3C) autour d'un deuxième axe de pivotement (29), et
* une première bielle auxiliaire (26) articulée sur l'avant-train (2) autour d'un premier axe de pivotement avant (31), et une deuxième bielle auxiliaire (27C) articulée sur l'avant-train (2) autour d'un deuxième axe de pivotement avant (32) et sur l'arrière train (3C) autour d'un deuxième axe de pivotement arrière (33),
les trois bielles (25, 26, 27C) étant disposées de telle façon que la bielle principale (25) converge vers l'arrière avec la deuxième bielle auxiliaire (27C) en un point de convergence virtuel arrière (C), ***caractérisée en ce que*** :
- la première bielle auxiliaire (26) est réglable en longueur et est articulée sur l'arrière-train (3C) autour d'un premier axe de pivotement arrière (29),
- la deuxième bielle auxiliaire (27C) est de longueur réglable, chaque longueur spécifique de la deuxième bielle auxiliaire (27C) correspondant à une position de largeur de coupe respective des corps de labour (14C).

2. Charrue selon la revendication 1, ***caractérisée en ce que*** l'axe longitudinal (26a) de la première bielle auxiliaire (26) coupe l'axe longitudinal (25a) de la bielle principale (25) aux alentours du deuxième axe de pivotement (29).

3. Charrue selon la revendication 2, ***caractérisée en ce que*** la première bielle auxiliaire (26) est de longueur réglable.

4. Charrue selon l'une des revendications 1 à 3, ***caractérisée en ce que*** le premier axe de pivotement avant (31) et le deuxième axe de pivotement avant (32) peuvent occuper plusieurs positions distinctes sur ledit avant-train (2), chaque position correspondant à une plage respective d'entrepneus (E ; e) de véhicules moteurs auxquels est destinée à être liée la charrue (1E).

5. Charrue selon la revendication 4, ***caractérisée en ce que*** l'avant-train (2) comporte trois trous (40, 41, 42) destinés à recevoir le premier axe de pivotement avant (31) et le deuxième axe de pivotement avant (32), le trou intérieur (42) et le trou médian (40) servant pour un véhicule moteur avec un entrepneu (E) plus large, tandis que le trou médian (40) et le trou extérieur (41) servant pour un véhicule moteur avec un entrepneu (e) moins large.

6. Charrue selon l'une des revendications 1 à 5, ***caractérisée en ce que*** les différents axes de pivotement sont, en position de travail, sensiblement verticaux.
